# EUROPEAN PATENT SPECIFICATION

(11) **EP 0 548 229 B1**
(45) Date of publication and mention of the grant of the patent: **20.03.1996**
(21) Application number: 91916988.8
(22) Date of filing: 18.09.1991
(51) Int. Cl.: F16C 11/10, F16M 11/14

(54) **LOCKABLE BALL-AND-SOCKET JOINT**
VERRIEGELBARES KUGELGELENK
ARTICULATION A ROTULE VERROUILLABLE

(30) Priority: 18.09.1990 SE 9002972
(43) Date of publication of application: 30.06.1993
(73) Proprietor: MPI TEKNIK AB, 175 62 Järfälla (SE)
(72) Inventor: ANDREASSON, Leif, S-423 34 Torslanda (SE); DANIELSSON, Bjarne, S-430 94 Bohus-Björkö (SE); JAKOBSSON, Lars, S-417 47 Göteborg (SE); LARSSON, Jan, S-431 33 Mölndal (SE); LJUNG, Orvar, S-446 00 Älvängen (SE)
(74) Representative: Hellbom, Lars Olof
(86) International application number: SE9100614
(87) International publication number: WO9205367

(56) References cited:
- DE-A- 2 147 306
- DE-A- 3 841 744
- SE-A- 8 903 466
- US-A- 2 354 937
- US-A- 3 737 130
- DERWENT'S ABSTRACT No. A51 90 J/48, SU 898 142, publ. week 8248 (EPISHIN VK).
- DERWENT'S ABSTRACT No. G45 50 B/30, SU 627 257, publ. week 7930 (EPISHIN VK).

## Description

The present invention relates to a lockable ball-and-socket joint, comprising a socket, a ball moveable mounted in the socket and having fastening means directed away from the socket, and a locking means for fixing the ball relative to the socket.

The purpose of the present invention is in general to provide a lockable ball-and-socket joint of the abovementioned type, which is simple and reliable and which can be used with advantage as a support for a fixture or table which can be set at various angles.

In particular, the purpose is to achieve a ball-and-socket joint which is suitable to be combined with a support device of the type shown and described in Swedish patent application 8903943-2, publication no. SE-B-465535, and which is operated by pressure medium for adjusting the height and which is provided with pressure medium controlled blocking means for locking the moving parts of the support relative to each other after height adjustment.

The invention provides a ball-and-socket joint of the type described above by way of introduction in which the socket is formed of an element displaceably mounted in a chamber with a semi-spherical depression receiving the ball, that the chamber on a side facing the fastening means is bounded by a bearing element with a sliding surface complementary to the ball and that means are provided for supplying pressure medium to an opposite side of the chamber so that the displaceably mounted element is displaced under the influence of pressure of the medium towards the bearing element to clamp the ball fixedly between itself and the bearing element.

A ball-and-socket joint having these features is known from DE-A-3841744.

Such a ball-and-socket joint can be manufactured of few components and is simple in its construction. Contributing to this simplicity is the fact that it only has one moving part in addition to the ball, namely the. socket, which has a double function, i.e. it functions both as a bearing element and as a locking element. Since the locking function is controlled by a pressure medium, the ball-and-socket joint can be combined with advantage with the support device shown in Swedish Patent Application 8903943-2. The means for supplying or draining the pressure medium from the ball-and-socket joint can be integrated into the control circuit for the support device for height adjustment or locking.

In the invention the joint also has the features of the characterising part of claim 1.

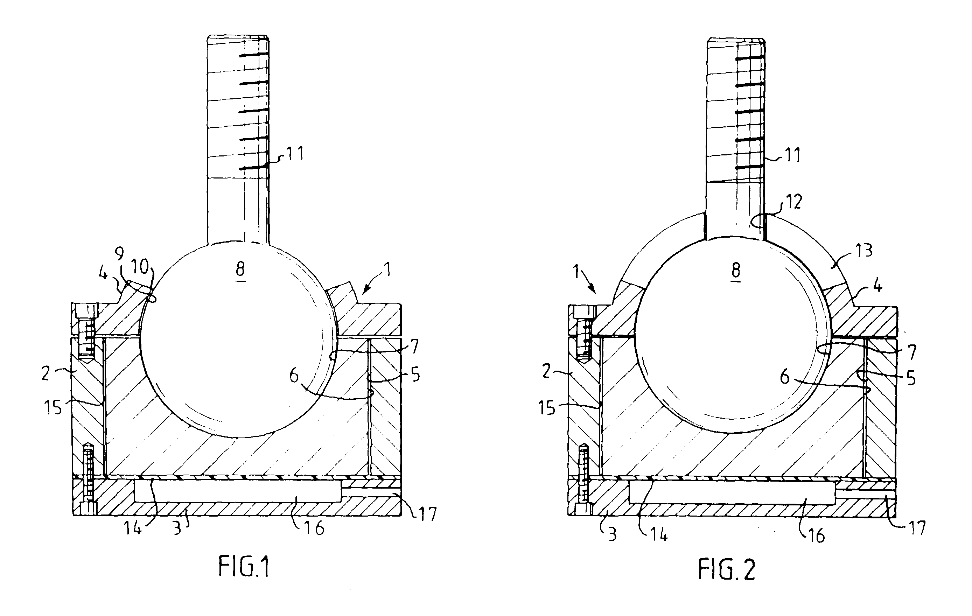

The invention will be described below with reference to examples shown in the accompanying drawing, where Figures 1 and 2, respectively, show longitudinal sections through a first and a second embodiment, respectively, of a ball-and-socket joint, and

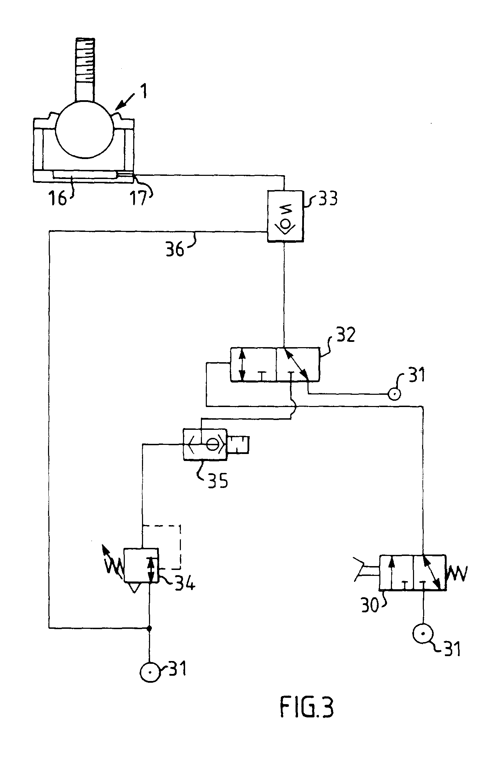

Figure 3 is a circuit diagram of a pneumatic circuit for controlling the locking function.

The ball-and-socket joint according to the invention comprises a housing with a general designation 1, consisting of a cylindrical portion 2, a bottom plate 3 and a bearing element 4, which are held to each other by means of screws. Said components define a chamber 5, in which a cylindrical element 6 is enclosed and is so dimensioned that it is vertically displaceable in the chamber 5. The cylindrical element 6 is provided with a hemispherical depression 7, in which a ball 8 is received. The bearing element 4 is provided with a slide surface 9 which is complementary to the spherical surface of the ball 8. In the embodiment according to Figure 1, the bearing element 4 has a relatively large central opening 10, which exposes a portion of the ball which is joined to a threaded stud 11, designed to support for example a fixture, a table or the like. The embodiment of Figure 2 differs from that in Figure 1 in that the bearing element 4 essentially encloses the entire upper half of the ball 8 and that instead of the opening 10 it has two perpendicularly arranged through-slots 12 and 13, respectively, the width of which is adapted to the width of the stud 11. This embodiment provides a greater sliding or frictional surface on the bearing element but limits somewhat the freedom of adjustment. But repeated adjustment between various defined positions is, however, facilitated.

A diaphragm 14 is mounted between the bottom plate 3 and the cylindrical portion 2 of the housing. The diaphragm, which can consist of a polymer material, divides the chamber 5 into an upper portion 15 communicating with the atmosphere and a lower portion 16 which is sealed relative to the atmosphere and which communicates via a channel 17 with a compressed air system shown in Figure 3.

The compressed air system which is shown in Figure 3 comprises for example a foot pedal controlled "on-off" valve 30, which is connected to a pressure source 31 and controls a pneumatic valve 32, which, in the "off" position of the valve 30, establishes communication between the pressure source 31 and the chamber 16 via a pneumatic non-return valve 33. In the position shown in Figure 3 of the valves, the valve 30 is in its "off" position and in the chamber 16 there is thus the circuit pressure created by the pressure source 31, which means that the diaphragm 14 is pressed upwards and via the cylindrical element 6 presses the ball 8 against the bearing element 4. The pressure in the circuit is adapted so that a clamping force is obtained which is sufficient to fix the ball in its said position. The pressure, and thus the clamping force, is dependent on the friction between the components. The ball 8, the socket 6 and the bearing element 4 are preferably made of metal. The sliding surfaces can be coated with a frictional material, e.g. rubber, which makes it possible to use a lower pressure in the chamber 16 than if the sliding surfaces were clean metal surfaces.

The pneumatic system also comprises a pressure regulating valve 34 and a quick venting valve 35. The non-return valve 33 is constantly under circuit pressure via a line 36 connected to the pressure source and is kept open under the influence of the circuit pressure. When the foot pedal control valve 30 is switched to the "on" position in order to unlock the ball 8, the valve 32 is switched so that the chamber 16 is in communication with the atmosphere via the quick venting valve 35. The pressure in the chamber 16 is thus rapidly reduced to the pressure determined by the pressure control valve 34 but not lower, since the non-return valve function of the valve 34 discontinues the venting as soon as the pressure in the chamber 16 tends to be lower than the pressure determined by the pressure control valve 34. This pressure is set so that the force acting on the membrane 14 at least balances the weight of the socket 6 and the ball 8.

The non-return valve 33 functions to prevent sudden pressure drop in the chamber 16, thus unlocking the ball 8, e.g. if a fault should arise causing a pressure drop in the system.

The chamber 16 is made with a somewhat smaller diameter than the cylindrical chamber 5, so that an annular edge surface is formed which can support the socket 6 via the diaphragm 14 if the chamber 16 should be vented to atmospheric pressure.

## Claims

1. Lockable ball-and-socket joint, comprising a socket, a ball moveably mounted in the socket and having fastening means directed away from the socket, wherein the socket is formed of an element (6), displaceably mounted in a chamber (5) and having a semi-spherical depression (7) receiving the ball (8), the chamber on a side facing the fastening means (11) is bounded by a bearing element (4) with a sliding surface (9) complementary to the ball, and means (17) are provided for supplying pressure medium to an opposite side (16) of the chamber so that the displaceably mounted element (6) is displaced under the influence of pressure of the medium towards the bearing element to clamp the ball (6) fixedly between itself and the bearing element, characterized in that a diaphragm (14) is fixed in a chamber (5) between the socket (6) and the means (17) for supplying pressure medium, so that the pressure of the medium acts on the diaphragm in a direction opposite the direction of the force of gravity acting on the socket.

2. Ball-and-socket joint according to Claim 1, characterized in that the depression (7) in the socket is hemispherical and that the sliding surface (9) of the bearing element (4) forms a spherical continuation of the depression in the socket.

3. Ball-and socket-joint according to one of Claim 1 or 2, characterized in that the socket (6), the ball (8) and the bearing element (4) are made of metal.

4. Ball-and-socket joint according to Claim 3, characterized in that the depression (7) of the socket (6) and the sliding surface (9) of the bearing element (4) have a coating of a frictional material.

5. Ball-and-socket joint according to one of Claims 1-4, characterized in that the chamber (16) is connected to a pressure medium circuit with valves (30, 32, 33, 34, 35) arranged in a first position to maintain such a pressure in the chamber that the ball (8) is clamped fixedly between the bearing element (4) and the moveable element (6) and a second position, in which a lower pressure is maintained, which at least balances the weight of the ball and the moveable element.

## Patentansprüche

1. Verriegelbares Kugelgelenk, das eine Gelenkpfanne, eine in der Gelenkpfanne bewegbar befestigte Kugel umfaßt und von der Gelenkpfanne wegweisende Befestigungsmittel aufweist, bei dem die Gelenkpfanne aus einem Element (6) gebildet ist, das in der Kammer (5) verschiebbar befestigt ist und eine halbkugelförmige Vertiefung (7) aufweist, die die Kugel (8) aufnimmt, bei dem die Kammer auf einer zu den Befestigungsmitteln (11) gerichteten Seite durch ein Lagerelement (4) mit einer zu der Kugel komplementären Gleitoberfläche (9) begrenzt ist und Mittel (17) zum Zuführen eines Druckmediums zu einer gegenüberliegenden Seite (16) der Kammer derart geschaffen sind, daß das verschiebbar befestigte Element (6) unter dem Einfluß des Drucks des Mediums gegen das Lagerelement verschoben wird, um die Kugel (6) zwischen sich selbst und dem Lagerelement festzuklemmen, dadurch **gekennzeichnet**, daß ein Diaphragma (14) in einer Kammer (5) zwischen der Gelenkpfanne (6) und den Mitteln (17) zum Zuführen eines Druckmediums befestigt ist, so daß der Druck des Mediums auf das Diaphragma in eine Richtung gegenüberliegend der Richtung der auf die Gelenkpfanne wirkenden Gewichtskraft einwirkt.

2. Kugelgelenk nach Anspruch 1, dadurch gekennzeichnet, daß die Vertiefung (7) in der Gelenkpfanne halbkugelförmig ist, und daß die Gleitfläche (9) des Lagerelements (4) eine halbkugelförmige Fortführung der Vertiefung in der Gelenkpfanne bildet.

3. Kugelgelenk nach einem der Ansprüche 1 oder 2, dadurch gekennzeichnet, daß die Gelenkpfanne (6), die Kugel (8) und das Lagerelement (4) aus Metall hergestellt sind.

4. Kugelgelenk nach Anspruch 3, dadurch gekennzeichnet, daß die Vertiefung (7) der Gelenkpfanne (6) und die Gleitfläche (9) des Lagerelements (4) eine Beschichtung aus einem Reibungsmaterial aufweisen.

5. Kugelgelenk nach einem der Ansprüche 1 bis 4, dadurch gekennzeichnet, daß die Kammer (16) mit einem Druckmediumkreislauf mit Ventilen (30, 32, 33, 34, 35) verbunden ist, die in einer ersten Position angeordnet sind, um solch einen Druck in der Kammer beizubehalten, daß die Kugel (8) zwischen dem Lagerelement (4) und dem bewegbaren Element (6) fest eingeklemmt ist und einer zweiten Position, in der ein niedrigerer Druck beibehalten ist, der das Gewicht der Kugel und des bewegbaren Elements zumindest im Gleichgewicht hält.

## Revendications

1. Articulation à rotule comprenant une douille, une rotule montée de façon mobile dans la douille et disposant de moyens de fixation dirigés au-delà de la rotule, dans laquelle la douille est formée par un élément (6), monté de façon mobile dans une chambre (5) et pourvu d'une cavité hémisphérique (7) destinée à recevoir la rotule (8), la chambre est reliée, sur un côté faisant face au moyen de fixation (11), à un élément palier (4) disposant d'une surface coulissante (9) complémentaire à celle de la rotule, et des moyens (17) sont prévus pour délivrer un fluide sous pression sur une face opposée (16) de la chambre afin que l'élément monté de façon mobile (6) soit déplacé sous l'influence de la pression du fluide vers l'élément palier pour bloquer la rotule (6) à demeure entre eux-mêmes et l'élément palier, caractérisée en ce qu'une membrane (14) est fixée dans une chambre (5) entre la douille (6) et les moyens (17) destinés à délivrer le fluide sous pression, de façon que la pression du fluide agisse sur la membrane dans un sens opposé au sens de la force de gravité agissant sur la douille.

2. Articulation à rotule selon la revendication 1, caractérisée en ce que la cavité (7) dans la douille est hémisphérique et que la surface coulissante (9) de l'élément palier (4) forme une continuation sphérique de la cavité dans la douille.

3. Articulation à rotule selon l'une des revendications 1 ou 2, caractérisée en ce que la douille (6), la rotule (8) et l'élément palier (4) sont réalisés en métal.

4. Articulation à rotule selon la revendication 3, caractérisée en ce que la cavité (7) de la douille (6) et la surface coulissante (9) de l'élément palier (4) sont revêtus d'une matière à coefficient de frottement élevé.

5. Articulation à rotule selon l'une des revendications 1 à 4, caractérisée en ce que la chambre (16) est reliée à un circuit de fluide sous pression comprenant des vannes (30, 32, 33, 34, 35) pouvant être disposées dans une première position pour maintenir une telle pression dans la chambre que la rotule (8) soit bloquée à demeure entre l'élément palier (4) et l'élément mobile (6) et dans une seconde position, dans laquelle une pression inférieure, qui équilibre au moins la masse de la rotule et de l'élément mobile est maintenue.
